# EUROPEAN PATENT APPLICATION

(11) **EP 4 583 132 A1**
(43) Date of publication of application: **09.07.2025**
(21) Application number: 23871529.6
(22) Date of filing: 14.08.2023
(51) Int. Cl.: H01G 9/028, H01G 9/145, H01G 9/15

(54) **SOLID ELECTROLYTIC CAPACITOR**

(30) Priority: 29.09.2022 JP 2022156874
(71) Applicant: Nippon Chemi-Con Corporation, Tokyo 141-8605 (JP)
(72) Inventor: SATO, Kenta, Tokyo 141-8605 (JP); MACHIDA, Kenji, Tokyo 141-8605 (JP); MOGAKI, Katsumi, Tokyo 141-8605 (JP); YOSHIOKA, Kyohei, Tokyo 141-8605 (JP)
(74) Representative: AWA Sweden AB
(86) International application number: PCT/JP2023/029438
(87) International publication number: WO 2024/070287

(57) **Abstract**

A solid electrolytic capacitor with both low ESR and high withstand voltage is provided. The solid electrolytic capacitor includes a capacitor element having anode foil, a cathode body, and an electrolyte. A surface of the anode foil is enlarged by tunnel-shaped etching pits and has dielectric film. The cathode body faces the anode foil. The electrolyte includes a solid electrolyte layer containing a conductive polymer. A weight of the conductive polymer is 11 mg/cm³ or less per unit volume of the capacitor element.

## Description

### FIELD OF INVENTION

The present disclosure relates to a solid electrolytic capacitor in which an electrolyte is a solid electrolyte layer or a solid electrolyte layer and a liquid component.

### BACKGROUND

Electrolytic capacitors include valve action metal, such as tantalum or aluminum, as anode foil and cathode foil. A surface of the anode foil is enlarged by making the valve action metal into a sintered body or a shape such as etching foil, and the enlarged surface has dielectric film by a process such as anode oxidation. An electrolyte intervenes between the anode foil and the cathode foil.

The specific surface area of this electrolytic capacitor can be enlarged by enlarging the surface of the anode foil, which is advantageous to achieve the capacitance larger than other types of capacitors. Furthermore, the electrolytic capacitor includes the electrolyte in a state of electrolytic solution. An area of the dielectric film of the anode foil that contacts the electrolytic solution increases. Therefore, the capacitance of the electrolytic capacitor can be further increased easily. However, the electrolytic solution evaporates and volatilizes to the outside over time, and the capacitance of th0e electrolytic capacitor decreases and the dissipation factor of the electrolytic capacitor increases over time, and the electrolytic capacitor dries up.

Accordingly, a solid electrolytic capacitor using a solid electrolyte is getting attention among the electrolytic capacitors. Manganese dioxide and 7,7,8,8-tetracyanoquinodimethane (TCNQ) complex are known as a solid electrolyte. In recent years, the conductive polymer derived from monomers having π-conjugated double bonds, such as poly(3,4-ethylenedioxythiophene) (PEDOT) with slow reaction speed and excellent adhesion to the dielectric film, are rapidly becoming popular. The conductive polymer has acid compounds such as polyanions are used as a dopant or have a substructure that acts as a dopant in the monomer molecule, exhibiting high conductivity. Therefore, the solid electrolytic capacitor is advantageous in that the equivalent series resistance (ESR) is low.

The solid electrolytic capacitor is less effective in repairing defects in the oxide film of the anode that is a dielectric than a liquid-type electrolytic capacitor in which a capacitor element is impregnated with electrolytic solution, and the leakage current may be increased. Therefore, a so-called hybrid-type solid electrolytic capacitor in which a solid electrolyte layer is formed on a capacitor element formed by facing the anode foil and the cathode foil via a separator, and voids of the capacitor element are impregnated with electrolytic solution for driving is proposed.

### PRIOR ART DOCUMENT

### PATENT DOCUMENT

Patent Document 1: JP2008-109068A
Patent Document 2: JP4536625B

### SUMMARY OF INVENTION

### PROBLEMS TO BE SOLVED BY INVENTION

Capacitors are used in various application. For example, in the field of power electronics, a power supply circuit, which converts AC power into DC power by a converter circuit and converts said DC power into desired AC power by an inverter circuit, is provided with a smoothing capacitor to suppress pulsation of DC output from the converter circuit, smooth the suppressed DC, and then input the smoothed DC to the inverter circuit. Furthermore, for the stable operation and noise removal of a semi-conductor switching element such as gallium nitride, a decoupling capacitor is provided near said semi-conductor switching element.

Along with higher power demand in recent years, higher withstand voltage is required for the solid electrolytic capacitor. For example, in the field such as power electronics, a capacitor with high withstand voltage of at least above 200 V is expected. However, it is not easy to maintain low ESR, which is the advantage of the solid electrolytic capacitor, while achieving high withstand voltage.

The present disclosure is proposed to address the above problems, and the objective to provide a solid electrolytic capacitor with both low ESR and high withstand voltage.

### MEANS TO SOLVE THE PROBLEM

To address the above problem, a solid electrolytic capacitor of the present embodiment includes: a capacitor element having anode foil, cathode body, and an electrolyte, in which a surface of the anode foil is enlarged by tunnel-shaped etching pits and has dielectric film, the cathode body faces the anode foil, the electrolyte includes a solid electrolyte layer containing a conductive polymer, and a weight of the conductive polymer is 11 mg/cm³ or less per unit volume of the capacitor element.

The weight of the conductive polymer may be 2 mg/cm³ to 11 mg/cm³ per unit volume of the capacitor element.

The weight of the conductive polymer may be 6.2 mg/cm³ to 9.0 mg/cm³ per unit volume of the capacitor element.

The solid electrolytic capacitor may include a liquid component filled in voids of the capacitor element.

The solid electrolyte layer may be formed by containing a part or all of the conductive polymers and a solvent in conductive polymer solution in which the conductive polymer is dispersed or dissolved.

The solid electrolyte layer may include a compound with a hydroxy group.

### EFFECT OF INVENTION

According to the present disclosure, the solid electrolytic capacitor has both low ESR and high withstand voltage.

### BRIEF DESCRIPTION OF DRAWINGS

Figs. 1 is a graph illustrating the relationship between the weight of the conductive polymer and the withstand voltage, and the relationship between the conductive polymer and the ESR according to the examples 1 to 8.
Figs. 2 is a graph illustrating the relationship between the weight of the conductive polymer and the withstand voltage, and the relationship between the conductive polymer and the ESR according to the examples 9 to 17.

### EMBODIMENTS

### (Solid Electrolytic Capacitor)

The solid electrolytic capacitor has a pair of electrode bodies and an electrolyte layer. One of the electrode bodies is anode foil, and dielectric film is formed on a surface of the anode foil. The other of the electrode body is a cathode body. The cathode body and the anode foil are arranged to face each other. The pair of the electrode bodies is arranged to face each other via the electrolyte layer. An assembly in which the pair of electrode bodies and the electrolyte layer are combined is called a capacitor element.

The capacitor element may include a separator. The separator intervenes between the pair of electrode bodies, separates the anode foil and the cathode body to prevent short-circuit, and holds the electrolyte layer. If the electrolyte layer can keep its shape on its own and can separate the pair of electrolyte bodies, the separator can be omitted from the capacitor element.

Anode lead wire is connected to the anode foil, and cathode lead wire is connected to the cathode body. The solid electrolytic capacitor is electrically connected to a mounting board via these anode lead wire and cathode lead wire. By conducting the solid electrolytic capacitor and the mounting board, the solid electrolytic capacitor becomes a passive element that gains the capacitance by dielectric polarization of dielectric film and stores and discharges electric charge.

### (Electrode Body)

In such a solid electrolytic capacitor, the electrode body is a foil body formed of valve action metal. In the wound-type solid electrolytic capacitor, a long strip of elongated valve action metal is frequently used, and in the planar-type solid electrolytic capacitor, a plate of elongated valve action metal is frequently used. The valve action metal is aluminum, tantalum, niobium, niobium oxide, titanium, hafnium, zirconium, zinc, tungsten, bismuth, and antimony, etc. The purity of the anode foil is desirably 99.9%, and the purity of the cathode body is desirably 99% or more, however, impurities such as silicon, iron, copper, magnesium, and zinc may be included.

An enlarged surface layer is formed on one or both surfaces of the anode foil. The enlarged surface layer is an etching layer with multiple tunnel-shaped etching pits. The tunnel-shaped etching pits are holes dug in the thickness direction of the foil. The tunnel-shaped pits may be formed in a length that penetrates through the foil or a length in which the deepest portion stays in the foil. Typically, the tunnel etching pits are formed by applying DC current on the anode foil in aqueous acidic solution in which halogen ions are present, such as hydrochloric acid. Furthermore, the tunnel-shaped etching pits are enlarged by applying DC current on the anode foil in aqueous acidic solution such as nitric acid.

For example, the cathode body may be cathode foil that has a foil shape. Otherwise, the cathode body may be a laminate of a metal layer such as silver and a carbon layer. The enlarged surface layer may also be formed on one or both surfaces of the cathode foil. The cathode foil may be plane foil without the enlarged surface layer. The enlarged surface layer of the cathode foil is an etching layer, a sintered layer in which powder of valve action metal is sintered, or a vapor-deposited layer in which particles of valve action metal are vapor-deposited on foil. That is, the enlarged surface layer of the cathode foil is formed by tunnel-shaped pits, spongy pits, or voids between dense powder or particles.

The dielectric film is formed on an uneven surface of the enlarged surface layer. Typically, the dielectric film is oxide film formed on a surface layer of the anode foil, and when the anode foil is formed of aluminum, the dielectric film is an aluminum oxide layer obtained by oxidizing the surface of the enlarged surface layer. In the chemical conversion treatment to form the dielectric film, voltage is applied on the anode foil in chemical conversion solution to achieve the desired withstand voltage. The chemical conversion solution is solution without halogen ions, and for example is phosphoric acid-based chemical conversion solution such as ammonium dihydrogen phosphate, boric acid-based chemical conversion solution such as ammonium borate, and adipic acid-based chemical conversion solution such as ammonium adipate, etc.

The cathode body may have natural oxide film, or thin oxide film (about 1 to 10 V) formed by the chemical conversion treatment. The natural oxide film is formed when oxygen in the air reacts with the cathode body.

### (Electrolyte Layer)

The electrolyte layer attaches to at least a part of the dielectric film of the anode foil and acts as a true cathode of the solid electrolytic capacitor. Preferably, the electrolyte layer adheres to all area of the dielectric film and is connected to the surface of the cathode body. This electrolyte layer is a solid electrolyte layer or is formed by the solid electrolyte layer and a liquid component. The solid electrolyte layer contains a conductive polymer. The liquid components is electrolytic solution for driving impregnated to voids of the capacitor element formed in the solid electrolyte layer, or a solvent of said electrolytic solution.

### (Solid Electrolyte Layer)

The conductive polymer is a self-doped conjugated polymer doped by dopant molecules in molecules or a doped conjugated polymer doped by external dopant molecules. The conjugated polymer is obtained by chemical oxidative polymerization or electrolytic oxidative polymerization of monomers with a π-conjugated double bond or derivatives thereof. The doped conjugated polymer exhibits high conductivity. That is, the conductivity is exhibited by adding a small amount of the dopant, such as an acceptor that easily accepts electrons or a donor that easily donates electrons to the conjugated polymer.

The solid electrolyte layer is formed using conductive polymer solution. The conductive polymer solution is liquid in which particles or powder of the conductive polymer is dispersed or dissolved. An additive is added to the conductive polymer solution as necessary. At least each of the anode foil, the pair of electrode bodies, and the separator, or the capacitor element is immersed in the conductive polymer solution, and are dried after immersion. The conductive polymer solution may be applied by droplet or by spraying other than immersion. By this, the conductive polymer and the additive are attached to form the solid electrolyte layer. The solid electrolyte layer may contain a part or all of the unvolatilized solvents from the conductive polymer solution.

The weight of the conductive polymer contained in the solid electrolyte layer is 11 mg/ cm³ or less per unit volume of the capacitor element. When said weight is 11 mg⁻³ or less per unit volume of the capacitor element, both low ESR and high withstand voltage can be achieved. Furthermore, it is preferable that the weight of the conductive polymer layer is 2 mg/ cm³ or more per unit volume of the capacitor element. When said weight is 2 mg / cm⁻³ to 11 mg/ cm³, the ESR becomes particularly low.

In particular, it is preferable that the weight of the conductive polymer is 6.2 mg/cm⁻³ to 9 mg/cm⁻³ per unit volume of the capacitor element. When the weight of the conductive polymer in this range, the ESR becomes extremely low, and the withstand voltage becomes extremely high. When the weight is below or above this range, the ESR increases and the withstand voltage decreases in comparison with the said range though the ESR is low and the withstand voltage is high in the absolute value.

The weight of the conductive polymer in the solid electrolyte layer may be adjusted by adjusting the amount of the conductive polymer dispersed or dissolved in the conductive polymer solution, or adjusting the amount of dispersion medium or the solvent. The actual weight of the conductive polymer contained in the conductive polymer layer is calculated from a difference between the weight of the capacitor element measured before and after the solid electrolyte layer is formed. Then, the weight of the conductive polymer contained in the conductive polymer layer is calculated from said difference and the concentration of the conductive polymer contained in the conductive polymer layer. Furthermore, the solid electrolytic capacitor may be disassembled, and only the conductive polymer may be extracted.

For such a solid electrolyte layer, known polymers may be used as the conjugated polymer without limitation. For example, the conjugated polymer may be polypyrrole, polythiophene, polyfuran, polyaniline, polyacetylene, polyphenylene, polyphenylenevinylene, polyacene, and polythiophenevinylene, etc. These conjugated polymers may be used in single or in combination of two or more, and may further be a copolymer of two or more types of monomers.

Among the above-described conjugated polymers, conjugated polymers formed by polymerizing thiophene or derivatives thereof are preferable, and conjugated polymers in which 3,4-ethylenedioxythiophene (that is, 2,3-dihydrothieno[3,4-b][1,4]dioxin), 3-alkylthiophene, 3-alkoxythiophene, 3-alkyl-4-alkoxythiophene, 3,4-alkylthiophene, 3,4-alkoxythiophene, or derivatives thereof are polymerized are preferable. The thiophene derivatives may preferably be compounds selected from thiophene with substituents at 3-position and 4-position, and the 3-position and 4-position substituents of the thiophene ring may form a ring together with the 3-position and 4-position carbon. It is preferable that the carbon number of an alkyl group and an alkoxy group is 1 to 16.

In particular, a polymer of 3,4-ethylenedioxythiophene which is called EDOT, that is, poly(3,4-ethylenedioxythiophene) which is called PEDOT is particularly preferable. Furthermore, substituents may be added to 3,4-ethylenedioxythiophene. For example, alkylated ethylenedioxythiophene to which an alkyl group with carbon number of 1 to 5 is added as a substituent may be used. For example, alkylated ethylenedioxythiophene may be methylated ethylenedioxythiophene (that is, 2-methyl-2,3-dihydro-thieno[3,4-b][1,4]dioxin), ethylated ethylenedioxythiophene (that is, 2-ethyl-2,3-dihydro-thieno[3,4-b][1,4]dioxin), butylated ethylenedioxythiophene (that is, 2-butyl-2,3-dihydro-thieno[3,4-b][1,4]dioxin), and 2-alkyl-3,4-ethylenedioxythiophene may be used.

As the dopant, known dopants may be used without limitation. The dopant may be used in single or in combination of two or more. Also, the dopant may be polymers or monomers. For example, the dopant may be inorganic acid such as polyanions, boric acid, nitric acid, and phosphoric acid, and organic acid such as acetic acid, oxalic acid, citric acid, tartaric acid, squaric acid, logisonic acid, croconic acid, salicylic acid, p-toluenesulfonic acid, 1,2-dihydroxy-3,5-benzenedisulfonic acid, methanesulfonic acid, trifluoromethanesulfonic acid, borodisalicylic acid, bisoxalate borate acid, sulfonylimide acid, dodecylbenzenesulfonic acid, propylnaphthalenesulfonic acid, and butylnaphthalenesulfonic acid.

For example, the polyanion may be polymers consisting of only component units with anion groups or polymers consisting of component units with anion groups and component units without anion groups, and may be substituted or unsubstituted polyalkylene, substituted or unsubstituted polyalkenylene, substituted or unsubstituted polyimide, substituted or unsubstituted polyamide, and substituted or unsubstituted polyester. In particular, the polyanion may be polyvinyl sulfonic acid, polystyrene sulfonic acid, polyaryl sulfonic acid, polyacrylic sulfonic acid, polymethacrylic sulfonic acid, poly(2-acrylamide-2-methylpropane sulfonic acid), polyisoprene sulfonic acid, polyacrylic acid, polymethacrylic acid, and polymaleic acid, etc.

The solvent of the conductive polymer solution, that is the solvent remaining in the solid electrolyte layer may be any solvent if the conductive polymer disperses or dissolves thereto, and water, or a mixture of water and organic solvent is preferable. The organic solvent of the conductive polymer dispersion may be polar solvents, alcohol, esters, hydrocarbon, carbonate compounds, ether compounds, linear ether, heterocyclic compounds, and nitrile compounds, etc.

The polar solvent may be N-methyl-2-pyrrolidone, N,N-dimethylformamide, N,N-dimethylacetoamide, and dimethylsulfoxide. The alcohol may be methanol, ethanol, propanol, and butanol, etc. The ester may be ethyl acetate, propyl acetate, and butyl acetate, etc. The hydrocarbon may be hexane, heptane, benzene, toluene, and xylene, etc. The carbonate compound may be ethylene carbonate and propylene carbonate, etc. The ether compound may be dioxane, diethylether, etc. The chain ether may be ethylene glycol alkyl ether, propylene glycol alkyl ether, polyethylene glycol dialkyl ether, and polypropylene glycol alkyl ether, etc. The heterocyclic compound may be 3-methyl-2-oxazolidinone, etc. The nitrile compound may be acetonitrile, glutaronitrile, methoxyacetonitrile, propionitrile, and benzonitrile, etc.

The additive for the conductive polymer solution may be polyhydric alcohol, organic binders, surfactants, dispersants, defoamers, coupling agents, antioxidants, UV absorbers, etc. The polyhydric alcohol may be sorbitol, ethylene glycol, propanediol, butanediol, pentanediol, hexanediol, heptanediol, octanediol, diethylene glycol, triethylene glycol, polyoxyethylene glycol, glycerin, polyglycerin, polyoxyethylene glycerin, xylitol, erythritol, mannitol, dipentaerythritol, pentaerythritol, or combination of two or more.

Such solvent, additive, or both forming the conductive polymer solution is preferably compounds with hydrophilic groups such as hydroxy groups or hydrophilic molecules. For example, the compound with a hydroxy group may be polyhydric alcohol such as ethylene glycol and glycerin, etc. The compound with hydroxy groups causes the change in the high-order structure of the conductive polymer, so that the ESR reduction effect and the withstand voltage improvement effect for the solid electrolytic capacitor can be achieved. Furthermore, the polyhydric alcohol has high boiling point and easily remains in the solid electrolyte layer.

### (Liquid Component)

The liquid component is electrolytic solution for driving impregnated or the solvent of the electrolytic solution for driving. The solvent of the electrolytic solution for driving may be a protic organic polar solvent or an aprotic organic polar solvent, and may be used in single or in combination of two or more.

The protic organic solvent that is the solvent may be monohydric alcohol, polyhydric alcohol, and oxyalcohol compounds, etc. The monohydric alcohol may be ethanol, propanol, butanol, pentanol, hexanol, cyclobutanol, cyclopentanol, cyclohexanol, and benzyl alcohol, etc. The polyhydric alcohol and the oxyalcohol compound may be ethylene glycol, diethylene glycol, propylene glycol, glycerin, methyl cellosolve, ethyl cellosolve, methoxypropylene glycol, dimethoxypropanol, polyglycerin, and alkylene oxide adduct of polyhydric alcohol such as polyethylene glycol, polyoxyethylene glycerin, and polypropyrene glycol, etc.

The aprotic organic polar solvent that is the solvent may be sulfones, amides, lactones, cyclic amides, nitriles, and sulfoxides, etc. The sulfone may be dimethyl sulfone, ethylmethyl sulfone, diethyl sulfone, sulfolane, 3-methyl sulfolane, and 2,4-dimethyl sulfolane, etc. The amide may be N-methylformamide, N,N-dimethylformamide, N-ethylformamide, N,N-diethylformamide, N-methylacetamide, N,N-dimethylacetamide, N-ethylacetamide, and N,N-diethylacetamide, etc. The lactone and the cyclic amide may be γ-butyrolactone, γ-valerolactone, δ-valerolactone, N-methyl-2-pyrrolidone, ethylene carbonate, propylene carbonate, butylene carbonate, and isobutylene carbonate, etc. The nitrile may be acetonitrile, 3-methoxypropionitrile, and glutaronitrile, etc. The sulfoxide may be dimethyl sulfoxide, etc.

When a solute of the electrolytic solution for driving is added to the liquid component, the solute is anion components and cation components. Typically, the solute is organic acid salt, inorganic acid salt, or salt of composite compound of organic acid and inorganic acid, and may be used in single or in combination of two or more. Acid that is the anion and base that is the cation may be separately added to the solvent.

The organic acid that becomes the anion component as the solute may be carboxylic acid such as oxalic acid, succinic acid, glutaric acid, pimelic acid, suberic acid, sebacic acid, phthalic acid, isophthalic acid, terephthalic acid, maleic acid, adipic acid, benzoic acid, toluyl acid, enanthic acids, malonic acids, 1,6-decandicarboxylic acid, 1,7-octanedicarboxylic acid, azelaic acid, undecanedioic acid, dodecanedioic acid, tridecanedioic acid, t-butyladipic acid, 11-vinyl-8-octadecenedioic acid, resolcinic acid, fluorochloric acid, gallic acid, gentisic acid, protocatechuic acid, pyrocatechuic acid, trimellitic acid, and pyromellitic acid, phenols, and sulfonic acid, etc.

The inorganic acid may be boric acid, phosphoric acid, phosphorus acid, hypophosphorous acid, carbonic acid, and silicic acid, etc. The composite compound of organic acid and inorganic acid may be borodisalicylic acid, borodioxalic acid, borodiglycolic acid, borodimalonic acid, borodisuccinic acid, borodiadipic acid, borodiazelaic acid, borodibenzoic acid, borodimaleic acid, borodilactic acid, borodimalic acid, boroditartric acid, borodicitric acid, borodiphthalic acid, borodi(2-hydroxy) isobutyric acid, borodiresorcinic acid, borodimethylsalicylic acid, borodinaftoeic acid, borodimandelic acid, and borodi(3-hydroxy) propionic acid, etc.

Furthermore, at least one salt of the organic acid, the inorganic acid, and the composite compound of organic acid and inorganic acid may be ammonium salt, quaternary ammonium salt, quaternary amidinium salt, amine salt, sodium salt, and potassium salt, etc. Quaternary ammonium ions of the quaternary ammonium salt may be tetramethylammonium, triethylmethylammonium, and tetraethylammonium, etc. The quaternary amidinium may be ethyldimethylimidazolinium and tetramethylimidazolinium, etc. The amine salt may be primary amines, secondary amines, and tertiary amines. The primary amine may be methylamine, ethylamine, propylamine, and the like, the secondary amines may be dimethylamine, diethylamine, ethylmethylamine and dibutylamine, and the like, and the tertiary amines may be trimethylamine, triethylamine, tributylamine, ethyldimethylamine, ethyldiisopropylamine, and the like.

Furthermore, other additives may be added to the electrolytic solution. The additives may be alkylene oxide adducts of polyhydric alcohol such as polyethylene glycol and polyoxyglycerin, complex compounds of boric acid and polysaccharides (mannit, sorbit, etc.), complex compounds of boric acid and polyhydric alcohol, borate esters, nitro compounds (o-nitrobenzoic acid, m-nitrobenzoic acid, p-nitrobenzoic acid, o-nitrophenol, m-nitrophenol, p-nitrophenol, p-nitrobenzylalcohol etc.), and phosphate esters, etc. These may be used in single or in combination of two or more.

### (Separator)

The separator includes cellulose such as kraft, Manila hemp, esparto, hemp, rayon, and mixed papers thereof, polyester resin such as polyethylene terephthalate, polybutylene terephthalate, polyethylene naphthalate, and derivatives thereof, polytetrafluoroethylene resin, polyvinylidene fluoride resin, vinylon resin, polyamide resin such as aliphatic polyamide, semi-aromatic polyamide, and total aromatic polyamide, polyimide resin, polyethylene resin, polypropylene resin, trimethylpentene resin, polyphenylene sulfide resin, acrylic resin, polyvinyl alcohol resin and the like, and the resin may be used in single or in combination.

Hereinafter, the present disclosure will be described in more detail based on examples. Note that the present disclosure is not limited to the below examples.

### (Examples 1 to 8)

Solid electrolytic capacitors of the examples 1 to 8 were produced as follows. The solid electrolytic capacitors of the examples 1 to 8 were a non-hybrid type and did not contain the liquid component in the electrolyte layer.

Firstly, both electrode bodies were long strip aluminum foil. DC etching was performed on both surface of the anode foil to form the tunnel-shaped pits. Furthermore, chemical conversion treatment was performed on the anode foil to form the dielectric film. In the chemical conversion treatment, the applied voltage reached 650 V. The pits were formed on both surfaces of the cathode foil by DC etching, and the oxide film was formed by the chemical conversion treatment using voltage of 3 Vfs. Both electrode bodies were connected to lead wire and were wound to face each other via a manila-based separator. Then, restorative chemical treatment was performed by ammonium borate aqueous solution.

Next, the capacitor element was immersed in the conductive polymer solution, and after the capacitor element was impregnated with the conductive polymer solution, the capacitor element was dried at 110°C. Polyethylene dioxythiophene doped with polystyrene sulfonic acid (PEDOT/PSS) was dispersed as the conductive polymer in the conductive polymer solution. The solvent of the conductive polymer solution was mixture solution of 90 wt% water and 10 wt% ethylene glycol.

By this, the solid electrolyte layer was formed in the capacitor element. Here, in the examples 1 to 8, the weight of the conductive polymer in the solid electrolyte layer was different. The weight of the conductive polymer was a weight per unit volume of the capacitor element, and hereinafter, referred to as the conductive polymer weight. The conductive polymer weight was adjusted by the concentration of PEDOT/PSS dispersed or dissolved in the conductive polymer solution.

As described above, the solid electrolytic capacitors of the examples 1 to 8 were produced by the same configuration, same composition, same production method, and same production condition, except for the amount of the conductive polymer.

### (Withstand Voltage and ESR)

The withstand voltage of the solid electrolytic capacitors of the examples 1 to 8 was measured. The measurement method for the withstand voltage was as follows. That is, voltage was applied on the solid electrolytic capacitor at 105 degrees. Initial voltage was 200 V, and applied voltage was increased by 1 V every 10 seconds. Then, voltage when current of 1 mA flown in the solid electrolytic capacitor was determined as the withstand voltage.

Furthermore, the ESR of the solid electrolytic capacitors of the examples 1 to 8 was measured. The measurement method for the withstand voltage was as follows. The ESR was measured using LCR meter from NF Corporation under the room temperature. The measurement frequency was 100 kHz, and the AC amplitude was sine wave of 0.5 Vms.

The measurement result of the withstand voltage and ESR are shown in the below table 1 together with the conductive polymer weight of the examples 1 to 8. In the table 1, the conductive polymer weight is expressed as the amount of the conductive polymer per unit volume of the capacitor element.

**[Table 1]**

| **Amount of Conductive Polymer (Electrolyte: Solid Electrolyte Layer Only)** | | | | | | | | |
|---|---|---|---|---|---|---|---|---|
| | **Example 1** | **Example 2** | **Example 3** | **Example 4** | **Example 5** | **Example 6** | **Example 7** | **Example 8** |
| **Amount of Conductive Polymer per Unit Volume of Element [mg/cm3]** | **1.2** | **2.0** | **3.7** | **6.2** | **8.6** | **9.0** | **10.3** | **11.0** |
| **Withstand Voltage [V]** | **568** | **568** | **568** | **558** | **553** | **515** | **403** | **331** |
| **ESR [Ω**/ **100kHz]** | **14.870** | **7.526** | **3.825** | **2.829** | **1.526** | **1.356** | **4.064** | **6.021** |

As shown in the table 1, the conductive polymer weight was the weight (mg/cm³) per unit volume of the capacitor element, and was varied from 1.2 mg/cm³ to 11.0 mg/cm³, so that the examples 1 to 8 took the unique value. Note that each conductive polymer weight was calculated by subtracting the weight of the capacitor element before immersion in the conductive polymer solution from the weight of the capacitor element after immersion and before drying, and multiplying the difference by the concentration of PEDOT/PSS.

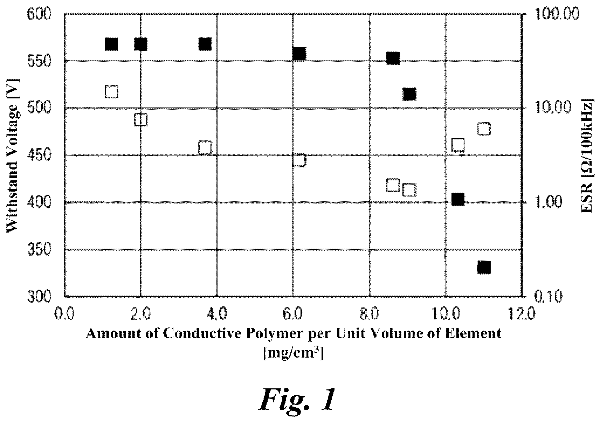

Based on this table 1, Fig. 1 is a graph illustrating the relationship between the conductive polymer weight and the withstand voltage, and the relationship between the conductive polymer weight and the ESR. In Fig. 1, the black plots are the withstand voltage, and the white plots are the ESR. Note that the ESR is expressed by logarithm.

As shown in the table 1 and Fig. 1, the withstand voltage was maintained 200 V or more in all range up to 11.0 mg/cm³ of the conductive polymer weight. In particular, the withstand voltage was maintained at high standard of more than 500 V until 9.0 mg/cm³. Furthermore, the ESR was excellent in all range up to 11.0 mg/m3, and in particular, the ESR at 2.0 mg/cm³ decreased down to half the ESR at 1.2 mg/cm³. Then, the ESR was minimized from 6.2 mg/cm³ to 9.0 mg/cm³, and was excellent after 10.3 mg/cm³ as an absolute value but rapidly increased when compared to that of 8.6 mg/cm³ to 9.0 mg/cm³.

Accordingly, the solid electrolytic capacitor achieved both low ESR and high withstand voltage when the conductive polymer weight was 11 mg/cm³ or less. Furthermore, the non-hybrid type solid electrolytic capacitor achieved further lower ESR and higher withstand voltage when the conductive polymer weight was 2 mg/cm³ to 11 mg/cm³. Moreover, the solid electrolytic capacitor achieved both minimized ESR and maximized withstand voltage when the conductive polymer weight was 6.2 mg/cm³ to 9.0 mg/cm³.

### (Examples 9 to 17)

Furthermore, solid electrolytic capacitors of the examples 9 to 17 were produced. The solid electrolytic capacitors of the examples 9 to 17 were a hybrid type, and the electrolyte layer was formed by the solid electrolyte layer and the liquid component. The liquid component was ethylene glycol of 59.4 wt%, polyethylene glycol of 39.6 wt%, and ammonium azelaate of 1 wt%. The average molecular weight of polyethylene glycol was 1000. The capacitor element was impregnated with the liquid component. The configuration, composition, manufacturing method, and manufacturing condition were the same as those of the examples 1 to 8, except for the conductive polymer weight.

### (Withstand Voltage and ESR)

The withstand voltage of the solid electrolytic capacitors of the examples 9 to 17 was measured. The measurement method and condition of the withstand voltage and the ESR were the same as those of the examples 1 to 8. The observation method of each conductive polymer weight was also the same as that of the examples 1 to 8.

The measurement result of the withstand voltage and ESR are shown in the below table 2 together with the conductive polymer weight of the examples 9 to 17. In the table 2, the conductive polymer weight is expressed as the amount of the solid electrolyte per unit volume of the element.

**[Table 2]**

| **Amount of Conductive Polymer (Electrolyte: Solid Electrolyte Layer+ liquid Component)** | | | | | | | | | |
|---|---|---|---|---|---|---|---|---|---|
| | **Example 9** | **Example 10** | **Example 11** | **Example 12** | **Example 13** | **Example 14** | **Example 15** | **Example 16** | **Example 17** |
| **Amount of Conductive Polymer per Unit Volume of Element [mg/cm3]** | **1.2** | **2.0** | **3.7** | **6.2** | **8.6** | **9.0** | **9.5** | **10.3** | **11.0** |
| **Withstand Voltage [V]** | **571** | **552** | **535** | **534** | **549** | **532** | **421** | **356** | **312** |
| **ESR [Ω/100kHz]** | **8.482** | **4.826** | **3.258** | **2.158** | **1.847** | **2.012** | **2.803** | **3.478** | **4.023** |

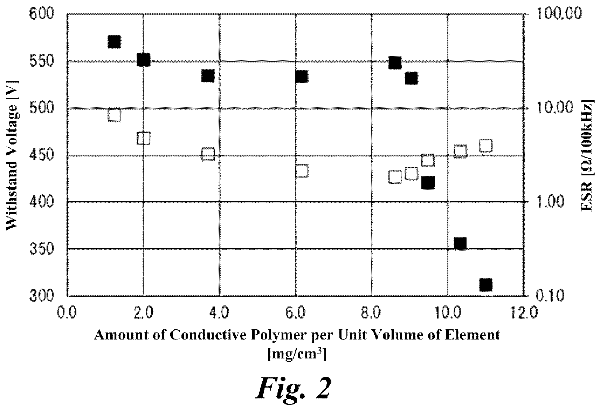

As shown in the table 2, the conductive polymer weight was the weight (mg/cm³) per unit volume of the capacitor element, and was varied from 1.2 mg/cm³ to 11 mg/cm³, so that the examples 9 to 17 took the unique value. Based on the table 2, Fig. 2 is a graph illustrating the relationship between the conductive polymer weight and the withstand voltage, and the relationship between the conductive polymer weight and the ESR. In Fig. 2, the black plots are the withstand voltage, and the white plots are the ESR. Note that the ESR is expressed by logarithm.

As shown in the table 2 and Fig. 2, the withstand voltage was maintained 200 V or more in all range up to 11.0 mg/cm³ of the conductive polymer weight. In particular, the withstand voltage was maintained at high standard of more than 500 V until 9.0 mg/cm³. Furthermore, the ESR was excellent in all range up to 11.0 mg/m³, and in particular, the ESR at 2.0 mg/cm³ decreased down to half the ESR at 1.2 mg/cm³. Then, the ESR was minimized from 6.2 mg/m³ to 9.0 mg/m³.

Accordingly, even in the hybrid-type, the solid electrolytic capacitor achieved both low ESR and high withstand voltage when the conductive polymer weight was 11 mg/cm³ or less. Furthermore, even in the hybrid-type, the solid electrolytic capacitor achieved both further lower ESR and higher withstand voltage when the conductive polymer weight was 2 mg/m³ to 11 mg/m³, and the solid electrolytic capacitor achieved both minimized ESR and maximized withstand voltage when the conductive polymer weight was 6.2 mg/cm³ to 9.0 mg/cm³.

## Claims

1. A solid electrolytic capacitor comprising a capacitor element having anode foil, cathode body, and an electrolyte,
wherein:
a surface of the anode foil is enlarged by tunnel-shaped etching pits and has dielectric film,
the cathode body faces the anode foil, the electrolyte includes a solid electrolyte layer containing a conductive polymer, and
a weight of the conductive polymer is 11 mg/cm³ or less per unit volume of the capacitor element.

2. The solid electrolytic capacitor according to claim 1, wherein the weight of the conductive polymer is 2 mg/cm³ to 11 mg/cm³ per unit volume of the capacitor element.

3. The solid electrolytic capacitor according to claim 1, wherein the weight of the conductive polymer is 6.2 mg/cm³ to 9.0 mg/cm³ per unit volume of the capacitor element.

4. The solid electrolytic capacitor according to any one of claims 1 to 3, comprising a liquid component filled in voids of the capacitor element.

5. The solid electrolytic capacitor according to any one of claims 1 to 3, wherein the solid electrolyte layer is formed by containing a part or all of the conductive polymers and a solvent in conductive polymer solution in which the conductive polymer is dispersed or dissolved.

6. The solid electrolytic capacitor according to claim 5, wherein the solid electrolyte layer includes a compound with a hydroxy group.
